# EUROPÄISCHE PATENTSCHRIFT

(11) **EP 0 903 959 B1**
(45) Veröffentlichungstag und Bekanntmachung des Hinweises auf die Patenterteilung: **05.12.2001**
(21) Anmeldenummer: 98440178.6
(22) Anmeldetag: 21.08.1998
(51) Int. Cl.: H04Q 11/04, H04J 3/16

(54) **Verfahren zum Übertragen von Datenpaketen und zur Durchführung des Verfahrens geeignetes Netzelement**
Method for transmitting data packets and network elements suitable for the execution of this method
Méthode pour transmettre de paquets de données et éléments de réseau appropriés à l'exécution de cette méthode

(30) Priorität: 12.09.1997 DE 19740107
(43) Veröffentlichungstag der Anmeldung: 24.03.1999
(73) Patentinhaber: ALCATEL, 75088 Paris (FR)
(72) Erfinder: Heuer, Volkmar, 71254 Ditzingen (DE)
(74) Vertreter: Schätzle, Albin, Dipl.-Phys.

(56) Entgegenhaltungen:
- GB-A- 2 278 979
- US-A- 5 247 518
- US-A- 5 479 401

## Beschreibung

Die Erfindung betrifft ein Verfahren zum Übertragen von Datenpaketen über ein synchrones digitales Nachrichtenübertragungsnetz nach dem Oberbegriff des Anspruchs 1 und ein Netzelement für ein synchrones digitales Nachrichtenübertragungssystem nach dem Oberbegriff des Anspruchs 13.

Als Transportmedium zur Verbindung lokaler Datennetze, sogenannter LANs (Local Area Networks), dienen Weitbereichsdatennetze, sogenannte WANs (Wide Area Networks). In einem Artikel von G. Parr et al. ("A Proposed Protocol Improvement for ATM Cell Processing Within SDH Multiplexers", ConneXions vol.10, no.11, Nov. 1996, S. 14-24) wird beschrieben, daß die Datenpakete zunächst einer *Interworking Unit* zugeleitet werden, die für ihren lokalen Knoten eine Routing-Tabelle besitzt. Ausgehende Datenpakete, deren Adressen in der Routing-Tabelle nicht enthalten sind, werden von einer ATM-Zugangseinheit (*ATM Acess Unit*) in ATM-Zellen (ATM: Asynchronous Transport Mode) umgewandelt und von einem *ATM-Switch* in geeignete virtuelle Kanäle innerhalb virtueller Pfade des ATM-WANs geleitet. Von dort gelangen die ATM-Zellen zu einem synchronen Multiplexer, der gemäß den SDH- oder SONET-Empfehlungen und Standards der ITU und ANSI arbeitet, und werden zur Übertragung in virtuelle Container und synchrone Transportmodule verpackt. Damit nicht an jedem SDH-Knoten alle Datenpakete wieder ausgepackt werden müssen, werden in den *Path Overhead* der virtuellen Container Informationsbytes geschrieben, die angeben, ob ein virtueller Container im nächsten SDH-Knoten wieder auszupacken ist. Nachteile dieses Verfahrens sind, daß eine Reihe teurer Geräte für das ATM-Netz benötigt werden und daß die Übertragungszeiten relativ hoch sind.

Datenpakete sind heutzutage meist nach dem Internet Protokoll (IP) aufgebaut und besitzen eine Absender- und eine Ziel-lP-Adresse. In einem Artikel der Fa. Ipsilon Networks ("IP Switching: The Intelligence of Routing, the Performance of Switching", Ipsilon Technical White Paper on IP Switching, Feb. 1996, abrufbar im Internet unter http://www.ipsilon.com/productinfo/wp-ipswitch.html) wird ein Gerät (IP-Switch) vorgestellt, welches die Funktion eines IP-Routers und eines ATM-Switches kombiniert. Es ist in der Lage längere Folgen von Datenpaketen mit gleicher Absender- und Zieladresse, sogenannte flows, zu identifizieren und für diese geeignete geräteinterne Verbindungen zu schalten. Dadurch wird der Durchsatz an Datenpaketen durch den IP-Switch erhöht und die mittlere Schaltzeit verkürzt. Die Kosten für ein Übertragungssystem mit solchen IP-Switches sind relativ hoch.

In "PPP over SONET/SDH" (W. Simpson, RFC 1619, Internet Engineering Task Force, Network Working Group, May 1994) wird für Punkt-zu-Punkt-Verbindungen vorgeschlagen, Datenpakete mittels PPP-Verkapselung in eine als synchronous payload envelope (SPE) bezeichnete Rahmenstruktur und damit direkt in synchrone Transportmodule (STM-N) von SDH oder synchrone Transportsignale (STS-N) von SONET zu verpacken. Dies hat aber den Nachteil, daß alle Transportmodule in jedem Netzknoten des synchronen Nachrichtenübertragungsnetzes, d.h. in dem Endpunkt der Punkt-zu-Punkt-Verbindung, ausgepackt werden müssen, was zum einen die Netzknoten belastet und zu Verstopfungen führen kann und zum anderen die Übertragungszeiten erhöht.

In US 5,247,518 wird ein lokales Datennetz (LAN) mit Ringstruktur beschrieben, in dem 16 SONET-Rahmen zur Datenübertragung zwischen den Netzknoten des Rings verwendet werden. Die SONET-Rahmen enthalten jeweils einen virtuellen Container vom Typ VC-4 dessen "Path Overhead POH" jedoch nicht verwendet wird. In jeden VC-4 sind an jeweils vorgegebener Stelle 34 Zellen gepackt, welche dem Datenaustausch im LAN dienen. Die 16 SONET-Rahmen stellen feste physikalische Verbindungen zwischen den Netzknoten dar, wobei jeder Netzknoten jede Verbindung terminiert. Die Netzknoten enthalten jeweils eine Schaltmatrix, die jede Zelle aus jedem VC-4 daraufhin überprüft wird, ob sie für den lokalen Knoten bestimmt ist oder nicht. Zellen, die für den lokalen Knoten bestimmt sind, werden einer asynchronen Benutzerschnittstelle zugeleitet, die übrigen Zellen werden wieder in neue sendeseitig gebildete SONET-Rahmen mit zugehörigem VC-4 gepackt. An der asynchronen Benutzerschnittstelle empfangene Daten werden gemäß einer Adressentabelle, in der die 16 festen Verbindungen eingetragen sind, in eine leere Zellregion einer der festen Verbindungen geschaltet.

Aufgabe der Erfindung ist es, ein Verfahren zur Übertragung von Datenpakten anzugeben, das kostengünstig zu realisieren ist und geringere Durchlaufzeiten erlaubt. Eine weitere Aufgabe der Erfindung ist, ein Netzelement eines synchrones digitales Übertragungssystem anzugeben, das für dieses Verfahren geeignet ist.

Die Aufgabe wird hinsichtlich des Verfahrens gelöst durch die Merkmale des Anspruchs 1 und hinsichtlich des Netzelementes durch die Merkmale des Anspruchs 13. Vorteilhafte Ausgestaltungen sind den abhängigen Patentansprüchen zu entnehmen.

Ein Vorteil der Erfindung ist, daß sie eine hierarchische Strukturierung von Weitbereichsdatennetzen gestattet.

Im folgenden werden Ausführungsbeispiele des Erfindung anhand der Figuren 1-12 beschrieben. Es zeigen:
- Figur 1: zwei über ein synchrones digitales Nachrichtenübertragungsnetz verbundene lokale Datennetze (LANs),
- Figur 2: den Übertragungsweg eines einzelnen Datenpaketes im Stand der Technik,
- Figur 3: den Übertragungsweg eines einzelnen Datenpaketes nach der Erfindung,
- Figur 4: ein synchrones digitales Übertragungssystem mit Multiplexern an den Übergabepunkten,
- Figur 5: ein nach dem erfindungsgemäßen Verfahren arbeitender Multiplexer,
- Figur 6: ein nach dem erfindungsgemäßen Verfahren arbeitender Cross-Connect,
- Figur 7: ein synchrones digitales Übertragungssystem mit erfindungsgemäß arbeitenden Kompressoren,
- Figur 8: ein Netzelement für ein synchrones digitales Nachrichtenübertragungsnetz,
- Figur 9: einen erfindungsgemäßen Cross-Connect,
- Figur 10: den schematische Aufbau eines in einem virtuellen Container verpackten Daten paketes,
- Figur 11: die hierarchische Strukturierung eines Weitbereichsdatennetzes (WAN) unter Einbeziehung des erfindungsgemäßen Übertragungssystems und
- Figur 12: die Steuerung eines solchen hierarchisch strukturierten Weitbereichsdatennetzes (WAN).

Ein Grundgedanke der Erfindung liegt darin, in dem synchronen digitalen Nachrichtenübertragungssystem unter Verwendung von Untereinheiten synchroner Transportmodule feste virtuelle, d.h. logische, Verbindungen aufzubauen. Solche Untereinheiten werden bei SDH-Systemen als virtuelle Container (VC), bei SONET-Systemen als *Virtual Tributaries (VT)* bezeichnet. Ein weiterer Grundgedanke besteht darin, die Datenpakete, die über ein synchrones digitales Nachrichtenübertragungsnetz übertragen werden, direkt, d.h. ohne Protokollkonvertierung wie bei ATM, in die Untereinheiten der synchronen Transportmodule zu verpacken, so daß die bepackten Untereinheiten ohne zwischengeschaltetes Aus- und wieder Einpacken von einer Datenquelle zu einer Datensenke transportiert werden können. Die Datenpakete können zusätzlich noch in einer Rahmenstruktur eines weiteren Protokolls, wie beispielsweise des HDLC-Protokolls verpackt sein. Ein dritter Grundgedanke ist, in dem Netzelement, das ein Datenpaket in einen virtuellen Container verpackt, die Zieladresse des Datenpaketes auszuwerten und eine Entscheidung zu treffen, über welche der virtuellen Verbindungen das Datenpaket transportiert wird. Bei Bedarf kann die Kapazität der virtuellen Verbindungen dynamisch der Auslastung angepaßt werden.

Unter einer virtuellen Verbindung, ist eine logische Verbindung zwischen zwei Netzelementen zu verstehen. Eine solche logische Verbindung entsteht, indem zwei Netzelemente periodisch Untereinheiten von synchronen Transportmodulen, sogenannte virtuelle Container, austauschen und dabei die Untereinheiten in anderen dazwischenliegenden Netzelementen ohne Umpacken durchgeschaltet werden. Virtuelle Verbindungen werden von einem zentralen Netzwerkmanagementsystem des synchronen digitalen Nachrichtenübertragungsnetzes eingerichtet und besitzen eine festgelegte, von dem Typ der virtuellen Container abhängigen Übertragungskapazität; d.h. es handelt sich um permanente virtuelle Verbindungen. Die möglichen virtuellen Verbindungen haben eine Übertragungskapazität von 2 MBit/s bei Verwendung von VC-12 Containern, von 6 MBit/s bei VC-2, 48 MBit/s bei VC-3 und 149 MBit/s bei VC-4 Containern.

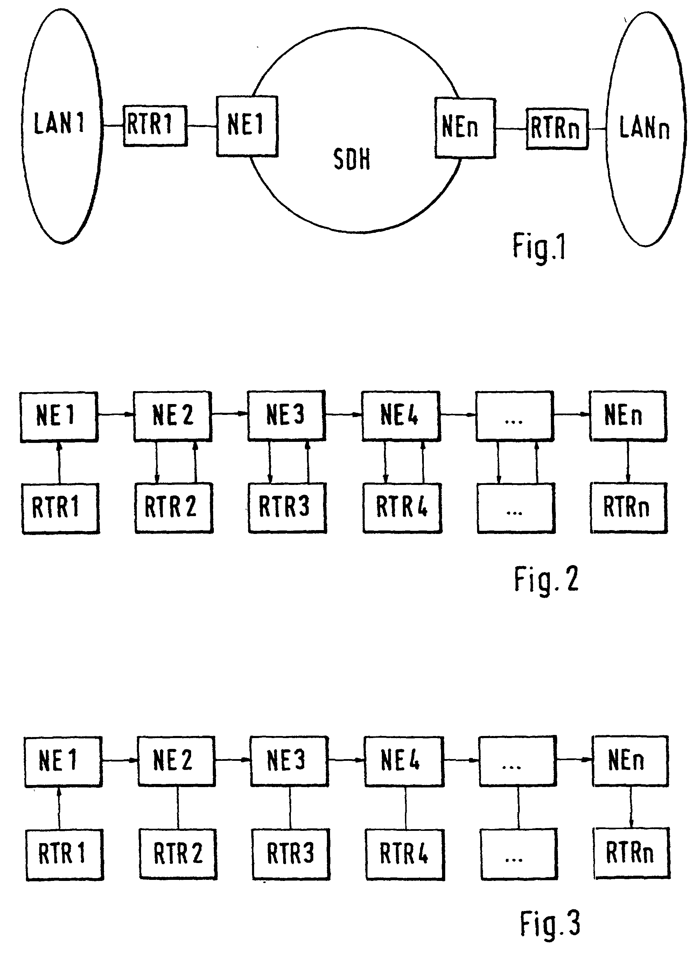

In Figur 1 ist ein digitales synchrones Nachrichtenübertragungsnetz SDH gezeigt. Ein erstes lokales Datennetz LAN1 ist über einen ersten Router RTR1 mit einem ersten Netzelement NE1 des synchronen Nachrichtenübertragungsnetzes SDH verbunden. Ein weiteres lokales Datennetz LANn ist über einen weiteren Router RTRn mit einem weiteren Netzelement NEn des synchronen Nachrichtenübertragungsnetzes SDH verbunden. Wird in dem ersten lokalen Datennetz LAN1 ein Datenpaket abgeschickt, das für einem Empfänger des weiteren Datennetzes LANn bestimmt ist, so reicht der erste Router RTRn das Datenpaket an das erste Netzelement NE1. In dem ersten Netzelement NE1 wird das Datenpaket als Nutzlast in ein synchrones Transportmodul verpackt und über das synchrone Nachrichtenübertragungsnetz SDH bis zu dem weiteren Netzelement NEn transportiert. Dort wird das Datenpaket wieder ausgepackt und über den weiteren Router RTRn in das weitere lokale Datennetz LANn geschickt.

Zwischen dem ersten NE1 und dem weiteren NEn Netzelement können zusätzliche Netzelemente geschaltet sein. Dies ist in den Figuren 2 und 3 dargestellt. An jedes der gezeigten Netzelemente NE1-NEn ist ein Router RTR1-RTRn angeschlossen, der ein nicht gezeigtes lokales Datennetz mit dem synchronen Nachrichtenübertragungsnetz verbindet.

In Figur 2 ist ein noch dem eingangs erwähnten Vorschlag von W. Simpson (Request for Comments 1619, Internet Engineering Task Force, Network Working Group, May 1994) betriebenes synchrones Übertragungssystem dargestellt. Es enthält n Netzelemente NE1...NEn, die zu einer Kette verschaltet sind. Jedes dieser Netzelemente besitzt einen Anschluß, an dem ein IP-Router RTR1-RTRn angeschlossen ist, der ein nicht gezeigtes lokales Datennetz mit dem synchronen Übertragungssystem verbindet. Der Weg eines Datenpaketes vom ersten RTR1 bis zum n-ten Router IP-Rn ist durch Pfeile dargestellt. Im ersten Netzelement NE1 wird das Datenpaket in einen virtuellen Container verpackt und an das zweite Netzelement NE2 geschickt. Dort wird es wieder ausgepackt und dem zweiten Router RTR2 zugeleitet, der die Zieladresse überprüft, feststellt, daß das Datenpaket nicht für sein angeschlossenes lokales Datennetz bestimmt ist, sondern weitergeschickt werden muß, und es dem zweiten Netzelement NE2 zum Weiterschicken wieder zuleitet. Dieser Ablauf wiederholt sich bei den folgenden Netzelementen solange, bis das Datenpaket den n-ten Router erreicht hat.

Ein Nachrichtenübertragungsnetz, daß nach einem solchen Verfahren arbeitet, bei dem in jedem Netzelement die in der Nutzlast synchroner Transportmodule übertragenen Datenpakete ausgepackt und dem angeschlossen Router übermittelt werden und bei dem der Router dann für jedes Datenpaket prüft, ob es für sein lokales Datennetz bestimmt ist und die übrigen Datenpakete zum Weitertransport an des angeschlossene Netzelement zurückschickt, benötigt lange Übertragungszeiten und belastet sowohl die Netzelemente als auch die IP-Router

Das in Figur 3 gezeigte synchrone Nachrichtenübertragungssystem arbeitet nach dem erfindungsgemäßen Verfahren: Ein Datenpaket wird, wie durch Pfeile angedeutet, von dem ersten Router RTR1 an das an dem n-ten Router RTRn angeschlossene lokale Datennetz übertragen. In dem ersten Netzelement wird die Zieladresse des Datenpaketes ausgewertet. Aus einer in dem ersten Netzelement NE1 gespeicherten Adressentabelle entnimmt das Netzelement, daß das Datenpaket bis zu dem n-ten Netzelement NEn gesendet werden muß und trifft daher anhand der Zieladresse und der Adressentabelle die Entscheidung, daß das Datenpaket in einen virtuellen Container eines synchronen Transportmodules verpackt wird, die für das n-te Netzelement bestimmt ist. Dieser virtuelle Container wird in den zwischengeschalteten n-2 Netzelementen NE2-NE(n-1) durchgeschaltet, ohne daß das Datenpaket ausgepackt wird. Zwischen dem ersten NE1 und n-ten Netzelement NEn besteht eine virtuelle Verbindung, die in der Adressentabelle aufgeführt ist. Über diese virtuelle Verbindung werden die virtuellen Container durchgeschaltet.

Eine solche virtuelle, logische Verbindung wird von einem zentralen Netzwerkmanagementsystem eingerichtet. Dabei ist es vorteilhaft, wenn nach vorbestimmten Zeitabschnitten, beispielsweise stündlich, die virtuellen Verbindungen im synchronen digitalen Nachrichtenübertragungssystem neu eingerichtet werden, um das Netz an die aktuelle Nutzung anzupassen. Bei einer solchen Neukonfiguration ist es auch möglich, zur Optimierung des Datenverkehrs Punkt-zu-Mehrpunkt-Verbindungen (sogenannte Multicast-Verbindungen) zu schalten, wenn dadurch eine bessere Datenübertragung erreicht wird.

Die Adressentabelle enthält für bestimmte Zieladressen oder Gruppen von Zieladressen einen Eintrag, der besagt, über welche der vorhandenen virtuellen Verbindungen das betreffende Datenpaket zu transportieren ist und wohin alle restlichen Datenpakete mit nicht verzeichneten Zieladressen transportiert werden sollen. Diese Adressentabelle wird vorteilhaft durch das zentrale Managementsystem für jedes der Netzelemente erstellt und verteilt. Eine andere Möglichkeit besteht darin, daß ein Netzelement sich die Adressentabelle selbst generiert, indem es die Ziel- und Absenderadressen ankommender Datenpakete protokolliert und daraus Informationen erhält, über welche virtuelle Verbindung eine bisher unbekannte Zieladresse zu erreichen ist. Dabei ist es vorteilhaft, wenn mehrere Netzelemente in vorbestimmten Zeitabständen ihre Adressentabellen beispielsweise über einen Dienstkanal abgleichen, damit Umwege und Schleifen im Netz vermieden werden.

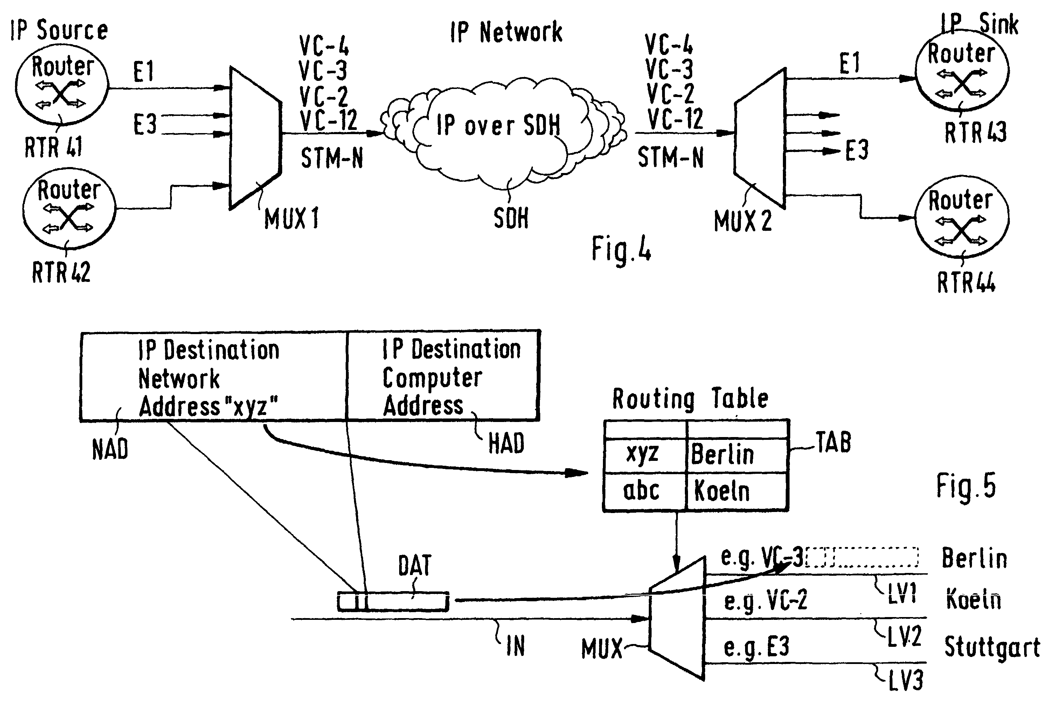

Die Netzelemente NE1 und NEn können beispielsweise Multiplexer und Demultiplexer sein. Dies ist als erstes Ausführungsbeispiel in Figur 4 und 5 dargestellt. Dabei zeigt Figur 4 ein erfindungsgemäß arbeitendes SDH-System. Ein erster Multiplexer MUX1 hat vier Eingänge, von denen zwei beispielhaft mit Routern RTR41, RTR42 und daran angeschlossenen lokalen Datennetzen verbunden sind. Die Router RTR41, RTR42 übermitteln Datenpakete aus den ihnen jeweils angeschlossenen lokalen Datennetzen, die für im jeweiligen lokalen Datennetz nicht erreichbare Adressaten bestimmt sind, an den ersten Multiplexer MUX1. Als Schnittstelle zwischen den Routem RTR41, RTR42 dienen die E1- und E3-Schnittstellen der plesiochronen digitalen Hierarchie (gemäß den Empfehlungen der CCITT/ITU-T).

Der Multiplexer kennt virtuelle Verbindungen in dem synchronen digitalen Nachrichtenübertragungsnetz SDH zu anderen Netzelementen im Netz. Er wertet die Zieladressen der eingehenden Datenpakete aus und trifft anhand dieser Zieladressen und der gespeicherten Adressentabelle die Entscheidung, über welche der virtuellen Verbindungen ein Datenpaket jeweils transportiert werden soll. Entsprechend dieser Entscheidung packt er ein jeweiliges Datenpaket in ein zu der ausgesuchten Verbindung korrespondierenden virtuellen Container, z.B. VC-4, VC-3, VC-2 oder VC-12. Über die virtuellen Verbindungen werden die Viruellen Container in dem synchronen digitalen Nachrichtenübertragungsnetz SDH zu einem empfangenden Netzelement transportiert, im ersten Ausführungsbeispiel zu einem zweiten Multiplexer MUX2. Dieser packt die Datenpakete aus den in dem empfangenen Transportmodulen enthaltenen Virtuellen Containern aus, wertet die Zieladresse aus und entscheidet anhand seiner Adressentabelle, über welchen seiner Ausgänge das jeweilige Datenpaket an einen angeschlossenen Router RTR43, RTR44 übertragen wird.

In dem ersten Ausführungsbeispiel handelt es sich bei den Datenpaketen um solche, die nach dem weit verbreiteten Internet Protokoll IP strukturiert sind. Daher werden die Router RTR41-RTR44 als IP-Router bezeichnet und das gesamte Weitbereichsdatennetzwerk als IP-Netzwerk (IP Network). Es sind aber auch andere Protokolle wie z.B. das Protokoll IPX der Firma Novell möglich.

In Figur 5 ist der Weg eines Datenpaketes DAT in dem ersten Ausführungsbeispiel näher gezeigt. Das über den Eingang IN des Multiplexers MUX eingehende Datenpaket DAT weist einem Adressenabschnitt auf, der eine Zieladresse ZAD und eine Absenderadresse enthält. In dem Beispiel lautet die Zieladresse "xyz". Der Multiplexer wertet die Netzwerkadresse NAD aus, indem er sie mit den in der Adressentabelle TAB gespeicherten Adressen vergleicht. Der Multiplexer MUX kennt drei virtuelle, logische Verbindungen LV1, LV2, LV3. Aus der Adressentabelle TAB ermittelt er, daß das Datenpaket über die erste logische Verbindung LV1 nach Berlin transportiert werden soll und packt das Datenpaket in einen entsprechenden Virtuellen Container mit dem Ziel Berlin. Die Adressentabelle wird analog zur gängigen Nomenklatur bei Routern auch als Routing Tabelle oder Routing Table bezeichnet.

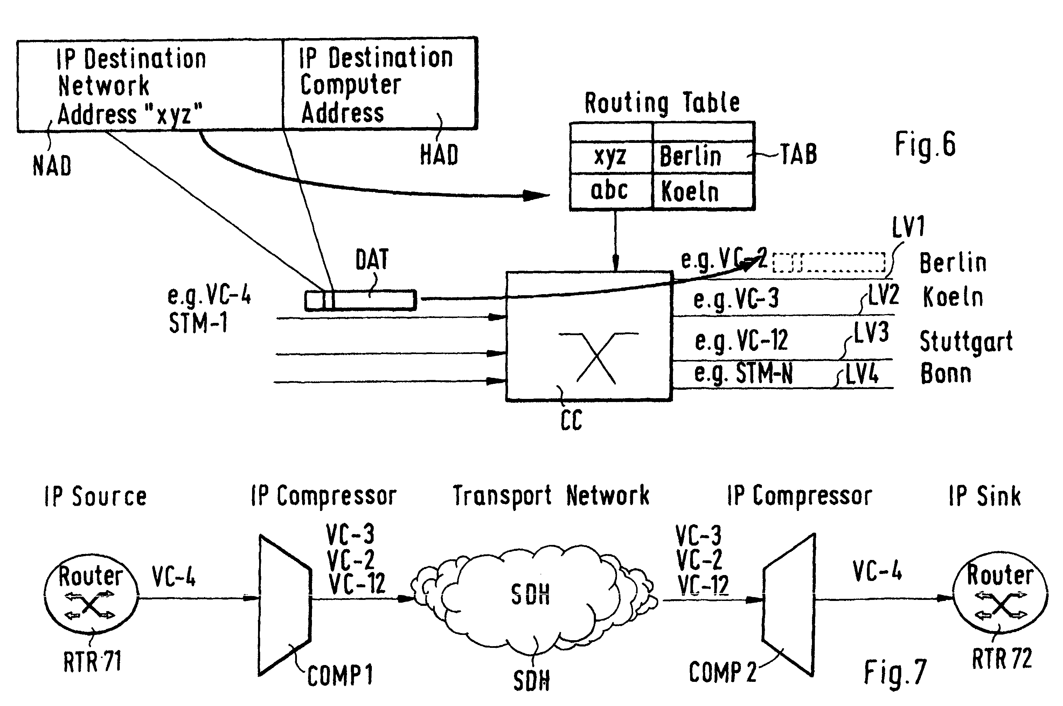

Ein zweites Ausführungsbeispiel ist in Figur 6 gezeigt. Es stellt ein nach dem erfindungsgemäßen Verfahren arbeitenden Cross-Connect CC des synchronen digitalen Nachrichtenübertragungsnetzes dar. Er empfängt an seinen Eingängen synchrone Transportmodule, von denen ein Teil mit Datenpaketen bepackt ist. Ein anderer Teil kann beispielsweise für Telefongespräche oder andere Dienste benutzt sein. In dem Cross-Connect CC werden die Datenpakete aus der Nutzlast der Transportmodule ausgepackt und die Netzwerkadresse der Datenpakete wird ausgewertet. Anhand der gespeicherten Adressentabelle TAB und der Zieladresse entscheidet der Cross-Connect, über welche der verfügbaren virtuellen Verbindungen LV1-LV4 ein jeweiliges Datenpaket transportiert wird und packt es in den zugehörige virtuellen Container. In dem Beispiel lautet die Netzwerkadresse NAD wieder "xyz" was für den Zielort Berlin steht. Dementsprechend wird das Datenpaket DAT in den virtuellen Container VC-2 für Berlin verpackt.

In einem dritten in Figur 7 gezeigten Ausführungsbeispiel ist das Netzelement am Übergabepunkt zwischen einem lokalen Datennetz und dem synchronen digitalen Nachrichtenübertragungsnetz SDH ein Kompressor COMP1. Er hat eine Schnittstelle gemäß den ITU-Empfehlungen für SDH zu einem Router RTR71 des lokalen Datennetzes, über die er in einen virtuellen Container VC-4 verpackte Datenpakete empfängt. In dem Kompressor werden die Datenpakete aus dem virtuellen Container ausgepackt und die Zieladressen der Datenpakete werden ausgewertet. Füllbits oder Füllpakete, die eine mögliche zeitliche Lücke zwischen zwei übertragenen Datenpaketen ausfüllen, werden weggelassen. Anhand einer Adressentabelle wird auch in diesem Fall eine Entscheidung getroffen, in welchen von einer Reihe ausgehender virtueller Container ein jeweiliges Datenpaket wieder verpackt wird und damit über welche von einer Reihe bestehender virtueller Verbindungen es übertragen wird. Die ausgehenden virtuellen Container besitzen, zumindest wenn der eingehende virtuelle Container nicht voll bepackt ist, eine in der Summe kleinere Nutzlast als dieser. Dadurch wird die Netzlast auf das wirkliche Datenaufkommen komprimiert. Kurzfristige Schwankungen des eingehenden Datenaufkommens über die Kapazität der ausgehenden Container können durch Verwendung eines Zwischenspeichers abgepuffert werden. Bei länger andauernder Überlastung der ausgehenden virtuellen Verbindungen kann deren Kapazität mittels des zentralen Netzwerkmanagementsystems erhöht werden.

Einer der virtuellen Pfade vom ersten Kompressor COMP1 endet bei einem zweiten Kompressor COMP2, der die empfangenen Datenpakete auspackt und mit Datenpaketen von anderen virtuellen Verbindungen zusammen in einem größeren virtuellen Container verpackt, der an einen zweiten angeschlossenen IP-Router RTR72 übertragen wird.

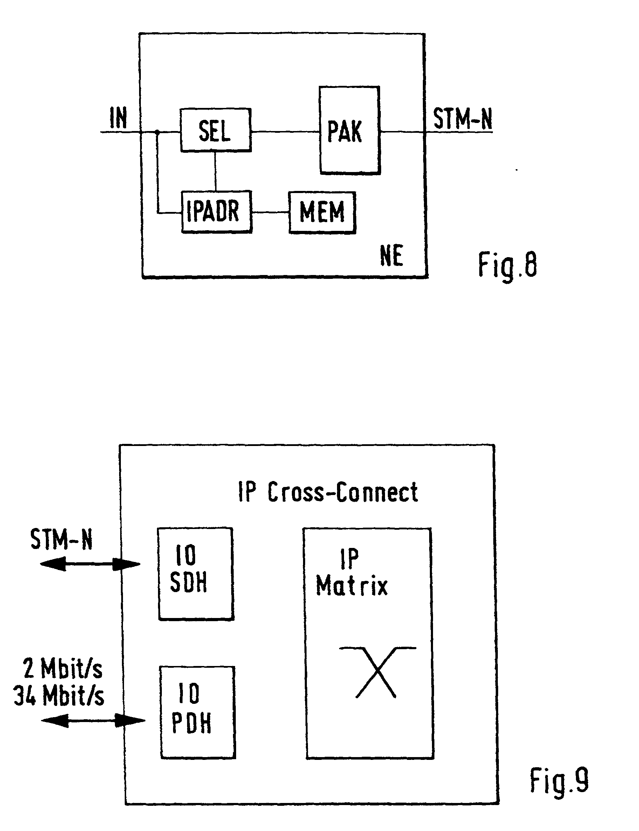

Ein erfindungsgemäßes Netzelement NE ist in einem vierten Ausführungsbeispiel in Figur 8 dargestellt. Es enthält eine mit dem Eingang IN verbundene Auswahleinrichtung SEL, die die Datenpakete in Abhängigkeit einer von einem Adressmonitor IPADR getroffenen Entscheidung einer von einer Reihe virtueller Verbindungen LV1-LV5 zuordnet. Bei der Schnittstelle am Eingang IN des Netzelementes kann es sich um eine PDH-Schnittstelle, eine SDH-Schnittstelle oder auch um eine andere für LAN-Router übliche Schnittstelle handeln. Die Zieladresse der eingehenden Datenpakete wird von dem Adressmonitor IPADR ausgewertet, der auch Zugriff auf eine in einem Speicher MEM enthaltene Adressentabelle hat und anhand der Zieladressen empfangener Datenpakete und der Adressentabelle die Entscheidung trifft, über welche der verfügbaren virtuellen Verbindungen ein Datenpaket transportiert werden soll. Das Netzelement NE enthält eine Packvorrichtung PAK, die das Datenpaket entsprechend der ausgewählten virtuellen Verbindung in einen der periodisch über diese Verbindung übertragenen virtuellen Container verpackt. Das Ausgangssignal STM-N des Netzelementes NE ist ein synchrones Transportmodul für SDH, beispielsweise mit der festgelegten Größe STM-1. Es kann mehrere virtuelle Container verschiedener Größe enthalten und entsprechend können mehrere virtuelle Verbindungen verschiedener Kapazität über den einen Ausgang des Netzelementes NE verlaufen.

In Figur 9 sind die funktionalen Baugruppen eines für den Transport von gemäß dem Internet-Protokoll strukturierten Datenpaketen ausgelegten Cross-Connect für ein SDH-System dargestellt. Er enthält Ein/Ausgabeschnittstellen für Verbindungen gemäß der plesiochronen digitalen Hierarchie (PDH) und Ein/Ausgabeschnittstellen gemäß der synchronen digitalen Hierarchie (SDH) sowie die üblichen Verarbeitungsmittel IOPDH, IOSDH für die Datensignale der beiden Übertragungssysteme. Zusätzlich enthält der Cross-Connect eine IP-Matrix, die die Zieladressen eingehender Datenpakete auswertet und diese auf entsprechende virtuelle Verbindungen schaltet. Der Cross-Connect kann daher als SDH-Netzelement mit integrierter IP-Router-Funktion angesehen werden.

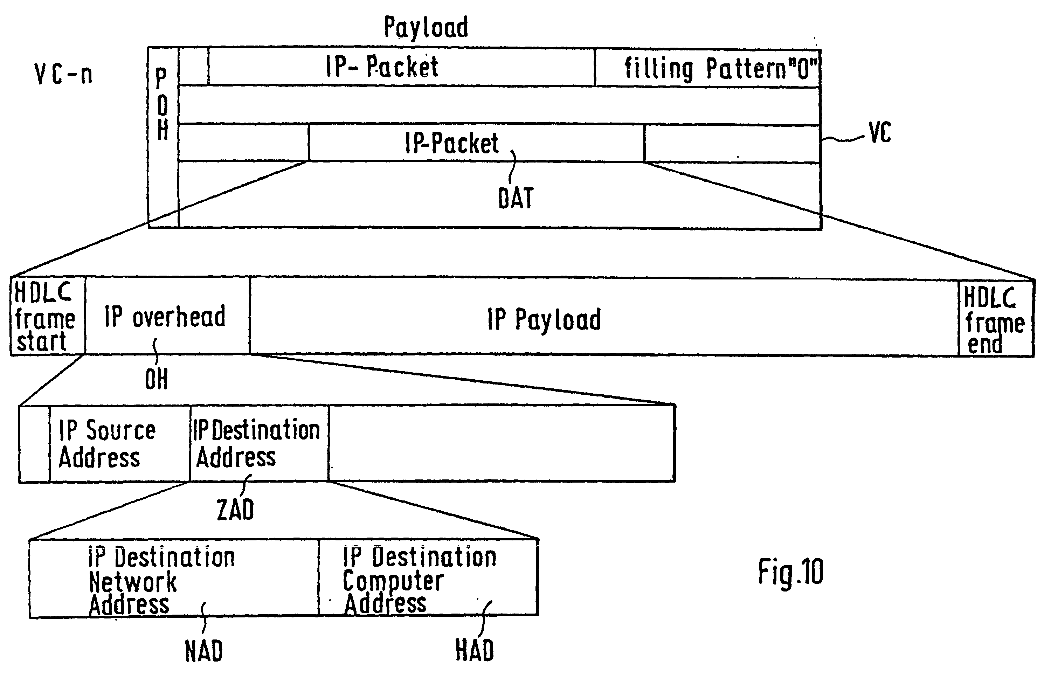

Der schematische Aufbau eines erfindungsgemäß in einem virtuellen Container VC verpackten Datenpaketes ist in Figur 10 gezeigt. In der Nutzlast (Payload) des virtuellen Containers werden zu übertragende Datenpakete DAT verpackt. Zu Zeiten wenn keine Datenpakete vorliegen, wird die Nutzlast mit einem vorbestimmten Füllmuster, beispielsweise mit Nullen, aufgefüllt. Das Datenpaket DAT hat gemäß dem Internet-Protokoll an Anfang und Ende ein vorgegebenes Bitmuster als Anfangs- und Ende-Indikator und einen Kopfbereich OH. In dem Kopfbereich sind eine Absenderadresse und eine Zieladresse (ZAD) enthalten, wobei die Zieladresse ZAD aus einer Netzwerk- NAD und einer Hostadresse HAD besteht.

Die Datenpakete entsprechen der Schicht 3 (Vermittlungs-Schicht) im 7-Schichten OSI-Modell, während die synchronen Transportmodule der Schicht 1 (Bit-Übertragungs-Schicht) angehören. Die Datenpakete können zusätzlich in einem Rahmen der Schicht 2 (Sicherungs-Schicht) verpackt sein, beispielsweise nach dem üblichen HDLC-Protokoll. So können z.B. wie in Figur 10 gezeigt als Anfangs- und Ende-Indikatoren Rahmenstrukturen und Kopfteil des HDLC-Protokolls verwendet werden.

Besonders vorteilhaft ist es, wenn bei dem erfindungsgemäßen Verfahren, insbesondere in Cross-Connectoren, nur die Netzwerkadresse NAD ausgewertet wird. Dadurch erfolgt eine automatische Gruppierung der eingehenden Datenpakete zu Gruppen im gleichem Zielbereich. Erst im jeweiligen Zielbereich, beispielsweise einer Stadt oder einem Unternetzwerk, braucht die Hostadresse HAD, die den genauen Adressaten angibt, ausgewertet zu werden. Dadurch wird eine hierarchische Strukturierung von Weitbereichsdatennetzen ermöglicht.

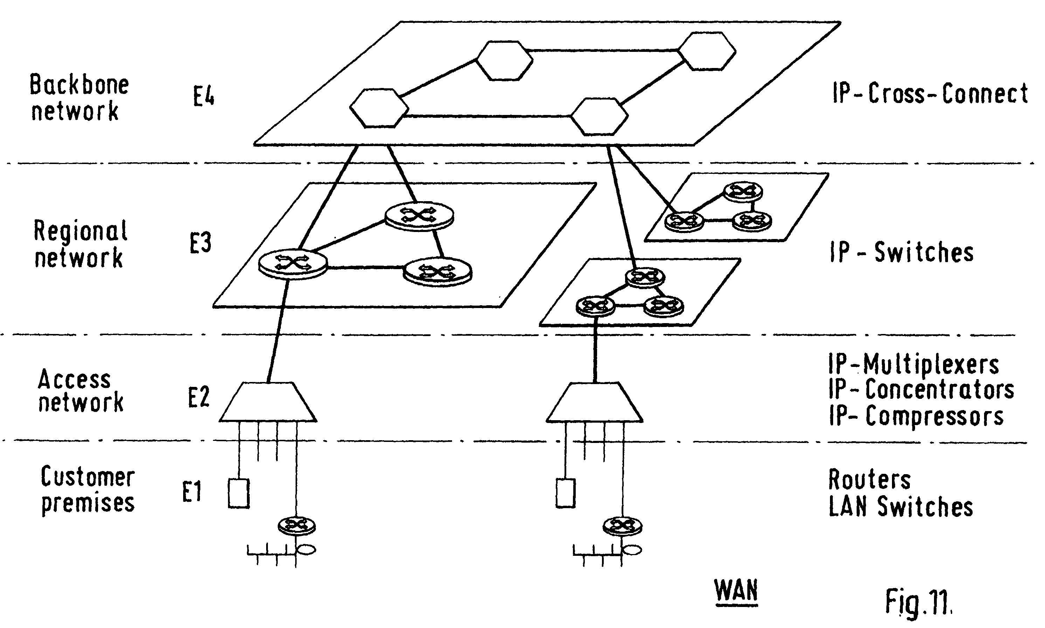

Ein Ausführungsbeispiel für eine solche hierarchische Strukturierung mittels erfindungsgemäßer Netzelemente ist in Figur 11 abgebildet. Das Weitbereichsdatennetz WAN besteht aus vier Ebenen E1-E4. Die erste Ebene E1 wird aus einer Vielzahl herkömmlicher lokaler Datennetze mit Routern und LAN-Switches gebildet. Die einzelnen lokalen Datennetze sind mit Netzelementen der zweiten Ebene E2 verbunden. Die Netzelemente der zweiten Ebene sind Multiplexer, Konzentratoren und/oder Kompressoren und bilden die Übergabepunkte zwischen den lokalen Datennetzen und dem in der Hierarchie darüber angeordneten synchronen digitalen Nachrichtenübertragungsnetz.

Datenpakete, die für lokale Datennetze adressiert sind, die an demselben Netzelement angeschlossen sind, werden direkt an das entsprechende Zielnetzwerk der ersten Ebene E1 zurückgegeben. Alle anderen Datenpakete werden, gruppiert verpackt in entsprechende Virtuelle Container, an Netzelemente der dritten Ebene weitergeleitet. Dort erfolgt für eine Gruppe von Datenpaketen oder auch für jedes Datenpaket eine Auswertung der kompletten Zieladressen. Die dritte Ebene besteht aus regionalen Teilnetzen mit vermaschten Netzelmenten, deren Funktion als IP-Switch für SDH-Systeme zu bezeichnen ist. Datenpakete, die in den regionalen Teilnetzen nicht zugestellt werden können, werden an die vierte Ebene E4 weitergereicht. Die vierte Ebene E4 bildet ein Backbone-Netzwerk, daß die regionalen Netze der dritten Ebene E3 verbindet. Die Netzelemente der vierten Ebene sind Cross-Connectoren, die nur einen Teil der Zieladresse nämlich die Netzwerkadresse von zu übertragenden Datenpaketen auswerten.

Aus dieser Hierarchie wird ersichtlich, daß ein Aspekt der Erfindung darin besteht, daß zum Aufbau permanenter virtueller Verbindungen in der vierten Ebene E4 nur die Netzwerkadresse verwendet wird und daß von der dritten Ebene E3 durch die ganze Zieladresse spezifizierte Bündel von gerouteten Datenpaketen transparent über die permanenten virtuellen Verbindungen der vierten Ebene E4 transportiert werden. Die permanenten virtuellen Verbindungen sind vergleichbar mit einer sogenannten Pipe, durch die die Bündel mit einer konstanten Bitrate durch das synchrone digitale Nachrichtenübertragungsnetz geschaltet werden.

Ein Vorteil dieser Strukturierung besteht darin, daß die Durchlaufzeiten der Datenpakete in der vierten Ebene sehr gering sind, da sie nicht zwischengespeichert sondern nur durchgeschaltet werden.

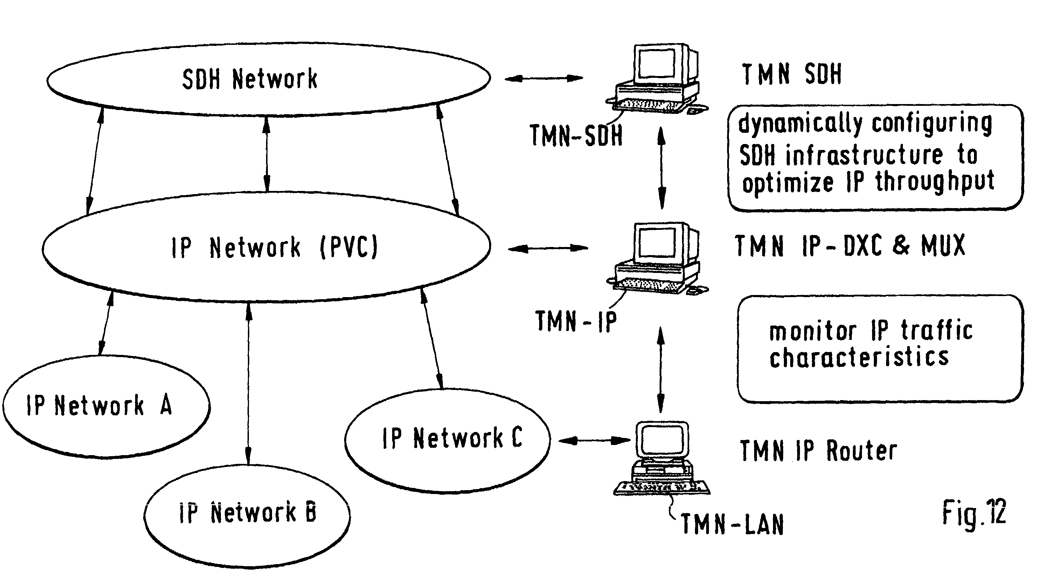

Ein Beispiel für die Strukturierung eines Netzwerkmanagementsystems für ein hierarchisch strukturiertes Weitbereichsdatennetzwerk ist in Figur 12 dargestellt. Das Netzwerkmanagementsystem besteht aus drei Teilsystemen. Das erste Teilsystem TMN-LAN dient der Verwaltung und Steuerung der lokalen Datennetze und deren Router und LAN-Switches. Das zweite Teilsystem TMN-IP verwaltet und steuert die Routing-Funktionen der erfindungsgemäßen Netzelemente, d.h. die für die Auswertung der Zieladressen und die Entscheidungsfindung verantwortlichen Funktionen. Es ist unter anderem verantwortlich für die Erstellung und den Abgleich der Adressentabellen und erfaßt das aktuelle und vergangene Aufkommen an Datenpaketen um so den Bedarf an virtuellen Verbindungen und Übertragungskapazität festzustellen. Das dritte Teilsystem TMN-SDH führt die üblichen Steuer- und Verwaltungsfunktionen für SDH-Netzelemente aus. Dazu gehört das Einrichten und Ändern von permanenten virtuellen Verbindungen in dem synchronen digitalen Nachrichtenübertragungssystem und die Überwachung von Warnungen und Fehleralarmen im Neiz.

Das erste TMN-LAN und das zweite Teilsystem TMN-IP sind miteinander verbunden, um Daten auszutauschen, beispielsweise zur Erstellung der Adressentabellen. Das zweite TMN-IP und das dritte Teilsystem TMN-SDH sind miteinander verbunden um Daten für die Erstellung neuer virtueller Verbindungen oder die Änderung der Kapazität bestehender virtueller Verbindungen auszutauschen. Z.B. kann das zweite Teilsystem feststellen, daß zu bestimmten Tageszeiten oder an bestimmten Wochentagen ein erhöhtes Datenaufkommen auf einer bestimmten Verbindung stattfindet und es weist daher das dritte Teilsystem TMN-SDH zum betreffenden Zeitpunkt an, die Kapazität dieser virtuellen Verbindung zu erhöhen. Das zweite Teilsystem TMN-IP erhält auch Meldungen von Netzelementen, daß eine momentane Überlastung einer virtuellen Verbindung vorliegt, und fordert daraufhin vom dritten Teilsystem TMN-SDH eine virtuelle Verbindung höherer Kapazität an. Das dritte Teilsystem TMN-SDH hat daher die Aufgabe, die Infrastruktur des synchronen digitalen Nachrichtenübertragungsnetzes dynamisch der Last anzupassen, während das zweite Teilsystem TMN-IP die Aufgabe hat, die längerfristige und die momentane Charakteristik des Datenaufkommens zu überwachen.

Mit dem Netzwerkmanagementsystem lassen sich auch weitere Funktionen realisieren, wie zum Beispiel eine gleichmäßige dynamische Lastverteilung im Netzwerk, auf Zieladressen basierende Filterfunktionen, Datenflußkontrolle und Schutzfunktionen beispielsweise durch die Schaltung redundanter Verbindungen.

Die beschriebenen Ausführungsbeispiele beziehen sich auf SDH-Systeme, die Erfindung ist jedoch auf SONET-Systeme und andere synchrone digitale Nachrichtenübertragungssysteme ebenso anwendbar.

Eine weitere vorteilhafte Ausführungsform besteht darin, daß in den erfindungsgemäßen Netzelementen zusätzlich eine Erkennung von sogenannten Flows stattfindet. Flows sind Folgen von Datenpaketen mit gleicher Ziel- und Absenderadresse und entstehen durch ausgedehnte IP-Konversation zwischen zwei Endgeräten. Ein Flow kann dann als ganzes behandelt und übermittelt werden, d.h. alle zugehörigen Datenpakete werden ohne Einzelprüfung aller Datenpakete durch das Netz geschaltet. Dadurch wird der Datendurchsatz durch das Netz erhöht und die Belastung der einzelnen Netzelemente gesenkt. Das Erkennen von Flows erfolgt dabei nach einem üblichen Verfahren.

## Patentansprüche

1. Verfahren zum Übertragen von Datenpaketen (DAT) über ein synchrones digitales Nachrichtenübertragungsnetz (SDH), bei dem die Datenpakete (DAT) in synchrone Transportmodule (STM-N) verpackt werden,
**dadurch gekennzeichnet,**
- **daß** Untereinheiten (VC) synchroner Transportmodule (STM-N) gleicher Größe verwendet werden, um logische virtuelle Verbindungen zwischen Netzelementen (NE1-NEn, MUX1, MUX2, CC1, CC2) des synchronen digitalen Nachrichtenübertragungsnetzes (SDH) einzurichten, wobei der Dateninhalt der Untereinheiten (VC) beim Transport zwischen den Endpunkten der logischen virtuellen Verbindung erhalten bleibt,
- **daß** die virtuellen Verbindungen (LV1-LV4) in eine Adressentabelle (TAB) eingetragen werden,
- **daß** in mindestens einem der Netzelemente (NE1-NEn, MUX1, MUX2, CC1, CC2) des synchronen digitalen Nachrichtenübertragungsnetzes eine Auswertung der Zieladresse (ZAD) der Datenpakete (DAT) erfolgt und
- **daß** zumindest für einen Teil der Datenpakete (DAT) von dem mindestens einen Netzelement des synchronen digitalen Nachrichtenübertragungsnetzes anhand der Adressentabelle (TAB) und der Zieladresse (ZAD) eine Entscheidung getroffen wird über welche der virtuellen Verbindungen (LV1-LV4) dieses Datenpaket (DAT) transportiert werden soll.

2. Verfahren noch Anspruch 1, bei dem die Datenpakete (DAT) aus einem lokalen Datennetz (LAN) stammen.

3. Verfahren nach Anspruch 1, bei dem die Datenpakete (DAT) nach dem Internet Protokoll strukturiert sind.

4. Verfahren nach Anspruch 1, bei dem die Zieladresse (ZAD) aus einer Netzadresse (NAD) und einer Hostadresse (HAD) besteht und in den Netzelementen nur die Netzadresse (NAD) ausgewertet wird.

5. Verfahren nach Anspruch 1, bei dem in jedem Netzelement eine Adressentabelle (TAB) gespeichert wird, die von einem zentralen Netzwerkmanagementsystem (TMN-IP) erstellt wird.

6. Verfahren nach Anspruch 1, bei dem die Adressentabelle (TAB) von einem Netzelement automatisch erstellt wird, indem die Zieladressen (ZAD) und die Absenderadressen ein- und ausgehender Datenpakete (DAT) protokolliert werden.

7. Verfahren nach Anspruch 6, bei dem mehrere Netzelemente ihre Adressentabellen (TAB) abgleichen.

8. Verfahren nach Anspruch 7, bei dem der Abgleich der Adressentabellen (TAB) über einen Dienstkanal erfolgt.

9. Verfahren nach Anspruch 1, bei dem die virtuellen Verbindungen (LV1-LV4) noch vorbestimmten Zeitabschnitten in Abhängigkeit der Nutzung von einem zentralen Netzwerkmanagementsystem (TMN-IP, TMN-SDH) neu eingerichtet werden.

10. Verfahren nach Anspruch 1, bei dem eine neue feste logische virtuelle Verbindung auf Veranlassung eines Netzelementes eingerichtet wird, wenn die Anzahl zu übertragender Datenpakete mit einer einheitlichen Zieladresse (ZAD) oder einer Gruppe benachbarter Zieladressen einen Schwellenwert überschreitet.

11. Verfahren nach Anspruch 1, bei dem Folgen von Datenpaketen (DAT) mit gleicher Absender- und Zieladresse erkannt und gleich behandelt werden.

12. Verfahren nach Anspruch 1, bei dem durch das Netzelement am Übergabepunkt zum synchronen digitalen Nachrichtenübertragungsnetz die Entscheidung getroffen wird, über welche der virtuellen Verbindungen ein Datenpaket transportiert werden soll.

13. Netzelement (NE) für ein synchrones digitales Nachrichtenübertragungssystem, **gekennzeichnet durch**
- eine Schnittstelle (IN), über die das Netzelement Datenpakete (DAT) mit einer Zieladresse (ZAD) empfängt,
- einen Speicher (MEM), in dem eine Adressentabelle (TAB) mit Einträgen über logische virtuelle Verbindungen LV1-LV4 zwischen Netzelementen des synchronen digitalen Nachrichtenübertragungsnetzes (SDH) gespeichert ist, wobei die logischen virtuellen Verbindungen unter Verwendung von Untereinheiten (VC) synchroner Transportmodule (STM-N) gleicher Größe eingerichtet sind und der Dateninhalt der Untereinheiten (VC) beim Transport zwischen den Endpunkten der logischen virtuellen Verbindung erhalten bleibt,
- Mittel (IPADR) zum Auswerten der Zieladresse (ZAD) der Datenpakete (DAT),
- Mittel (SEL) zum Treffen einer Entscheidung anhand der Zieladresse (ZAD) und der Adressentabelle (TAB), über welche der virtuellen Verbindungen (LV1-LV4) ein Datenpaket (DAT) transportiert werden soll.

14. Netzelement nach Anspruch 13, das ein Multiplexer (MUX; MUX1, MUX2) oder Konzentrator ist.

15. Netzelement nach Anspruch 13, das ein Cross-Connector (CC; CC1, CC2) ist und die Mittel zum Auswerten der Zieladresse (ZAD) nur zum Auswerten der in der Zieladresse enthaltenen Netzwerkadresse vorgesehen sind.

16. Netzelement nach Anspruch 13, das ein Kompressor (COMP1, COMP2) ist und erste eingehende Untereinheiten synchroner Transportmodule in zweite, ausgehende , kleinere Untereinheiten synchroner Transportmodule umpackt, wenn die eingehenden Untereinheiten nicht voll bepackt sind.

## Claims

1. Process for transmitting data packets (DAT) via a synchronous digital data transmission network (SDH), in which the data packets (DAT) are packed into synchronous transport modules (STM-N), **characterised in that**
- sub-units (VC) of synchronous transport modules (STM-N) of equal size are used to establish logical virtual connections between network elements (NE1-NEn, MUX1, MUX2, CC1, CC2) of the synchronous digital data transmission network (SDH), wherein the data content of the sub-units (VC) is retained during the transportation between the end points of the logical virtual connection,
- the virtual connections (LV1-LV4) are entered into an address table (TAB),
- in at least one of the network elements (NE1-NEn, MUX1, MUX2, CC1, CC2) of the synchronous digital data transmission network, an evaluation of the destination address (ZAD) of the data packets (DAT) takes place, and
- at least for one part of the data packets (DAT) from the at least one network element of the synchronous digital data transmission network, a decision is made on the basis of the address table (TAB) and the destination address (ZAD) as to which one of the virtual connections (LV1-LV4) is used to transmit this data packet (DAT).

2. Process according to Claim 1, in which the data packets (DAT) come from a local area network (LAN).

3. Process according to Claim 1, in which the data packets (DAT) are structured according to the Internet protocol.

4. Process according to Claim 1, in which the destination address (ZAD) consists of a network address (NAD) and a host address (HAD) and only the network address (NAD) is evaluated in the network elements.

5. Process according to Claim 1, in which an address table (TAB) is stored in each network element and is created by a central network management system (TMN-IP).

6. Process according to Claim 1, in which the address table (TAB) is automatically created by a network element by recording the destination addresses (ZAD) and the source addresses of incoming and outgoing data packets (DAT).

7. Process according to Claim 6, in which a number of network elements coordinate their address tables (TAB).

8. Process according to Claim 7, in which the coordination of the address tables (TAB) takes place via a service channel.

9. Process according to Claim 1, in which the virtual connections (LV1-LV4) are re-established at predetermined time intervals according to the utilisation of a central network management system (TMN-IP, TMN-SDH).

10. Process according to Claim 1, in which a new, fixed logical virtual connection is established at the instigation of a network element if the number of data packets to be transmitted, which have a uniform destination address (ZAD) or a group of neighbouring destination addresses, exceeds a threshold value.

11. Process according to Claim 1, in which sequences of data packets (DAT) with the same source or destination address are detected and handled in the same way.

12. Process according to Claim 1, in which the network element at the transfer point to the synchronous digital data transmission network makes the decision as to which of the virtual connections is used to transmit a data packet.

13. Network element (NE) for a synchronous digital data transmission system, **characterised by**
- an interface (IN) via which the network element receives data packets (DAT) with a destination address (ZAD),
- a memory (MEM) in which an address table (TAB) is stored, which has entries regarding logical virtual connections (LV1-LV4) between network elements of the synchronous digital data transmission network (SDH), wherein the logical virtual connections are established by the use of sub-units (VC) of synchronous transport modules (STM-N) of equal size and the data content of the sub-units (VC) is retained during the transportation between the end points of the logical virtual connection,
- means (IPADR) for evaluating the destination address (ZAD) of the data packets (DAT),
- means (SEL) for making a decision on the basis of the destination address (ZAD) and the address table (TAB) as to which one of the virtual connections (LV1-LV4) is used to transmit a data packet (DAT).

14. Network element according to Claim 13, that is a multiplexer (MUX; MUX1, MUX2) or concentrator.

15. Network element according to Claim 13, that is a cross-connector (CC; CC1, CC2) and the means for evaluating the destination address (ZAD) are provided for evaluating only the network address contained in the destination address.

16. Network element according to Claim 13, that is a compressor (COMF1, COMP2) and only repacks incoming sub-units of synchronous transport modules into second, outgoing, smaller sub-units of synchronous transport modules if the incoming sub-units are not fully packed.

## Revendications

1. Procédé pour transmettre des paquets de données (DAT) par l'intermédiaire d'un réseau de transmission de messages synchrone digital (SDH), avec lequel les paquets de données (DAT) sont emballés dans des modules de transport synchrones (STM-N), **caractérisé en ce que** des unités secondaires (VC) de modules de transport synchrones (STM-N) de même taille sont utilisées pour aménager des liaisons logiques virtuelles entre des éléments de réseau (NE1-NEn, MUX1, MUX2, CC1, CC2) du réseau de transmission de messages synchrone digital (SDH), le contenu des données des unités secondaires (VC) étant conservé lors du transport entre les points terminaux de la liaison logique virtuelle, **en ce que** les liaisons virtuelles (LV1-LV4) sont inscrites dans un tableau des adresses (TAB), **en ce que** dans au moins un des éléments de réseau (NE1-NEn, MUX1, MUX2, CC1, CC2) du réseau de transmission de messages synchrone digital a lieu une exploitation de l'adresse de destination (ZAD) des paquets de données (DAT) et **en ce qu'**au moins pour une partie des paquets de données (DAT) l'au moins un élément du réseau de transmission de messages synchrone digital décide, sur la base du tableau des adresses (TAB) et de l'adresse de destination (ZAD), par laquelle des liaisons virtuelles (LV1-LV4) ce paquet de données (DAT) doit être transporté.

2. Procédé selon la revendication 1, **caractérisé en ce que** les paquets de données (DAT) proviennent d'un réseau local de données (LAN).

3. Procédé selon la revendication 1, **caractérisé en ce que** les paquets de données (DAT) sont structurés selon le protocole Internet.

4. Procédé selon la revendication 1, **caractérisé en ce que** l'adresse de destination (ZAD) se compose d'une adresse de réseau (NAD) et d'une adresse d'hôte (HAD) et **en ce que** seule l'adresse de réseau (NAD) est exploitée dans les éléments de réseau.

5. Procédé selon la revendication 1, **caractérisé en ce que** dans chaque élément de réseau est mémorisé un tableau des adresses (TAB), qui est établi par un système central de gestion de réseau (TMN-IP).

6. Procédé selon la revendication 1, **caractérisé en ce que** le tableau des adresses (TAB) est établi automatiquement par un élément de réseau par le fait que les adresses de destination (ZAD) et les adresses d'expéditeurs des paquets de données (DAT) entrants et sortants sont consignées.

7. Procédé selon la revendication 6, **caractérisé en ce que** plusieurs éléments de réseau ajustent leurs tableaux des adresses (TAB).

8. Procédé selon la revendication 7, **caractérisé en ce que** l'ajustement des tableaux des adresses (TAB) a lieu par un canal de service.

9. Procédé selon la revendication 1, **caractérisé en ce que** les liaisons virtuelles (LV1-LV4) sont réaménagées selon des intervalles de temps prédéterminés et en fonction de l'utilisation par un système central de gestion de réseau (TMN-IP, TMN-SDH).

10. Procédé selon la revendication 1, **caractérisé en ce qu'**une nouvelle liaison fixe logique virtuelle est aménagée à la demande d'un élément de réseau, si le nombre de paquets de données à transmettre avec une adresse de destination uniforme (ZAD) ou un groupe d'adresses de destination voisines dépasse une valeur de seuil.

11. Procédé selon la revendication 1, **caractérisé en ce que** des suites de paquets de données (DAT) ayant la même adresse d'expéditeur et de destination sont reconnues et sont traitées de la même manière.

12. Procédé selon la revendication 1, **caractérisé en ce que** l'élément de réseau décide au point de transfert vers le réseau de transmission de messages synchrone digital par laquelle des liaisons virtuelles un paquet de données doit être transporté.

13. Elément de réseau (NE) pour un système de transmission de messages synchrone digital **caractérisé en ce que** l'élément de réseau reçoit des paquets de données (DAT) avec une adresse de destination (ZAD) par l'intermédiaire d'une interface (IN), **en ce qu'**un tableau des adresses (TAB) avec des inscriptions sur les liaisons logiques virtuelles (LV1-LV4) entre des éléments de réseau du réseau de transmission de messages synchrone digital (SDH) est mémorisé dans une mémoire (MEM), les liaisons logiques virtuelles étant aménagées en utilisant des unités secondaires (VC) de modules de transport synchrones (STM-N) de même taille et le contenu des données des unités secondaires (VC) étant conservé lors du transport entre les points terminaux de la liaison logique virtuelle, **en ce que** des moyens (IPADR) sont utilisés pour l'exploitation de l'adresse de destination (ZAD) des paquets de données (DAT) et **en ce que** des moyens (SEL) qui décident, sur la base de l'adresse de destination (ZAD) et du tableau des adresses (TAB), par laquelle des liaisons virtuelles (LV1-LV4) un paquet de données (DAT) doit être transporté.

14. Elément de réseau selon la revendication 13, **caractérisé en ce qu'**il est un multiplexeur (MUX ; MUX1, MUX2) ou un concentrateur.

15. Elément de réseau selon la revendication 13, **caractérisé en ce qu'**il est un Cross-Connector (CC ; CC1, CC2) et **en ce que** les moyens pour l'exploitation de l'adresse de destination (ZAD) ne sont prévus que pour l'exploitation de l'adresse de réseau contenue dans l'adresse de destination.

16. Elément de réseau selon la revendication 13, qui est un compresseur (COMP1, COMP2) et emballe des premières unités secondaires entrantes des modules de transport synchrones dans des secondes unités secondaires sortantes des modules de transport synchrones, plus petites, lorsque les unités secondaires entrantes ne sont pas complètement emballées.
